# EUROPEAN PATENT APPLICATION

(11) **EP 3 608 746 A1**
(43) Date of publication of application: **12.02.2020**
(21) Application number: 19189478.1
(22) Date of filing: 31.07.2019
(51) Int. Cl.: G05D 1/10, B64C 39/02

(54) **WILDLIFE INTERCEPT SYSTEM AND METHOD OF OPERATING**

(30) Priority: 06.08.2018 GB 201812742
(71) Applicant: GE Aviation Systems Limited, Cheltenham Gloucestershire GL52 8SF (GB)
(72) Inventor: SCHWINDT, Stefan, Cheltenham, Gloucestershire GL52 8SF (GB)
(74) Representative: Openshaw & Co.

(57) **Abstract**

A system and method for operating a wildlife intercept system (50), including receiving an indication of a presence of an intrusion in a predetermined area, determining a location of the intrusion in the predetermined area, and directing the intrusion away from the predetermined area by at least a subset of vehicles (40).

## Description

### TECHNICAL FIELD

The disclosure relates to a method and apparatus for operating an intrusion intercept system, and more specifically to contactor and more specifically to intercepting an intrusion in a restricted area by intercept vehicles.

### BACKGROUND

Wildlife or animals can be present on airport grounds including during flight operations. Wildlife intrusion in various areas of the airport grounds, such as an airplane runway can result in flight delays, aircraft damage, or other unintended consequences.

### BRIEF DESCRIPTION

In one aspect, the present disclosure relates to a method of operating an intrusion intercept system, the method including receiving, at a controller module, an indication of a presence of an intrusion in a predetermined area, determining, in the controller module, a location of the intrusion in the predetermined area, generating, in the controller module, a set of intercept paths configured to vector the intrusion toward a capture zone, providing the set of intercept paths to a respective set of intercept vehicles, and operating the set of intercept vehicles in accordance with the set of intercept paths.

In another aspect, the present disclosure relates to a system for vectoring an intrusion away from a predetermined zone, including an array of sensors disposed proximate to the predetermined zone and configured to detect a presence of the intrusion within the predetermined zone, a set of intercept vehicles adapted for movement within the predetermined zone and operable to execute movement within the predetermined zone in accordance with a respective set of intercept paths, and a controller module configured to receive an indication of the presence of the intrusion in a predetermined zone from the array of sensors, to determine a location of the intrusion in the predetermined zone, to generate a set of intercept paths configured to vector the intrusion toward a capture zone, and to provide the set of intercept paths to the set of intercept vehicles for execution of the set of intercept paths.

### BRIEF DESCRIPTION OF THE DRAWINGS

In the drawings:
FIG. 1 illustrates a schematic view of an airport having an intrusion, in accordance with various aspects described herein.
FIG. 2 illustrates a schematic view of a wildlife intercept system for the airport of FIG. 1, in accordance with various aspects described herein.
FIG. 3 is an exemplary schematic view of operation of the wildlife intercept system of FIG. 2 at the airport of FIG. 1, in accordance with various aspects described herein.
FIG. 4 is an exemplary method flowchart diagram of operating the wildlife intercept system of FIG. 2 in accordance with various aspects described herein.
FIG. 5 is another exemplary method flowchart diagram of operating the wildlife intercept system of FIG. 2 in accordance with various aspects described herein.

### DETAILED DESCRIPTION

Systems can be utilized to reduce wildlife intrusions in protected areas to increase airport operating efficiency. Aspects of the disclosure can be implemented in any environment, apparatus, or method for operating a system for directing or redirecting intrusions in a predetermined or protected area, out of the predetermined or protected area, regardless of what or where the area is defined as. In one non-limiting example, the intrusion can include a wildlife creature, animal, or person, and the predetermined or protected area can include an airport or runway.

While "a set of' various elements will be described, it will be understood that "a set" can include any number of the respective elements, including only one element. Also as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller module or processor, and the controller module or processor can perform processing on the value to determine a representative value or an electrical characteristic representative of said value.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

Also as used herein, "vectoring" or "to vector" can refer to the act of directing an object toward a specific direction or destination. For example, a first component can vector an object toward a specific or desired destination, or away from a referential point or area. In this sense the vectoring can include a magnitude (e.g. a speed at which the object is directed) and a direction, and can refer to ground-based or air-based objects. Vectoring can also be referred to as herding, chasing, or another exercise of power, force, or intimidation that generates desired movement in the object being vectored.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

A "path" or "path data," as used herein, can include a designated set of instructions or commands defining a movement for a vehicle. In an example of a ground-based vehicle, a path can include a heading, speed, approach, turns, acceleration, or the like to define directional movement along the path. In the example of an air-based vehicle, the path can include a subset of profiles, such as an ascent or climb profile, a cruise profile, or a descent profile, in addition to directional movement. In another example, a path can include waypoint data, approach data, or a respective set of performance characteristic "point" data, wherein a set of "points" can define a determined, estimated, or predicted position, airspeed, ground speed, altitude, heading, or the like, for a series or sequence of points along the path. In this sense, the path or path data can include a series or sequence of individual or discrete "points" or "models."

Non-limiting examples of vehicles can include automobiles, remotely controlled wheeled vehicles, unmanned autonomous vehicles, unmanned aerial vehicles, aircrafts, or the like. As used herein the term "determining" refers to a determination of the system or method of an outcome or result that has occurred or is occurring (e.g. a "current" or "present" outcome or result), and contrasts with the term "prediction," which refers to a forward-looking determination or estimation that makes the outcome or result known in advance of actual performance of the occurrence. The exemplary drawings are for purposes of illustration only and the dimensions, positions, order and relative sizes reflected in the drawings attached hereto can vary.

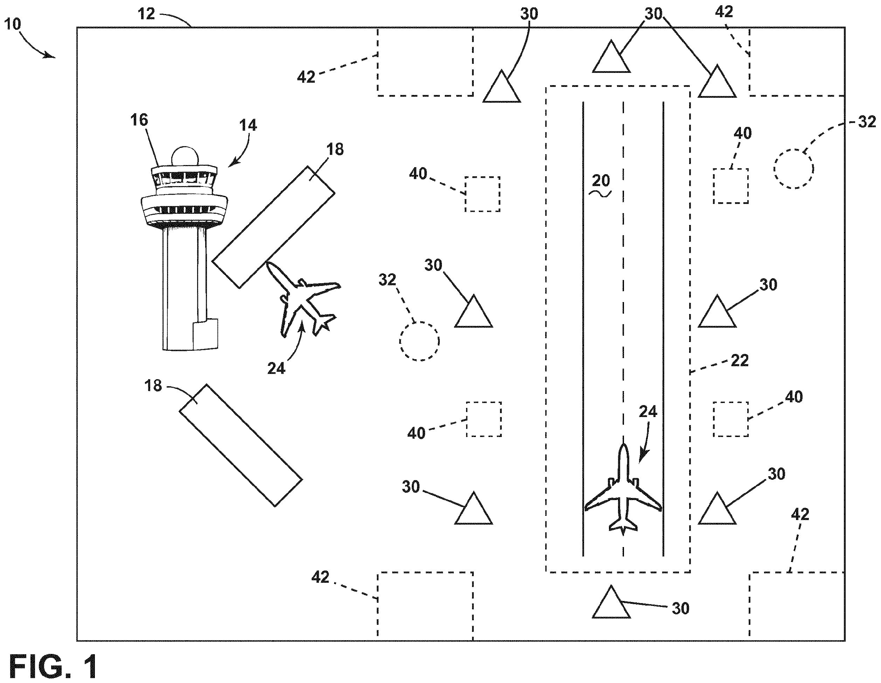

FIG. 1 illustrates one non-limiting example of a predefined or predetermined area 10 or zone, shown as an airport 12. In example, the airport 12 can be defined at least partially by a geometric perimeter structure, such as a fence, or a naturally occurring perimeter, such as a stream or berm. The airport 12 can include a set of structures 14, schematically illustrated as an airport control tower 16, at least one airport terminal 18, and an airplane runway 20 utilized for taxi, takeoff, or landing by an aircraft 24.

A portion of the runway 20 or a portion of the airport 12 including or surrounding the runway 20 can further be defined as a "protected" area or zone, and illustrated in dotted outline 22. In one example, the protected area 22 can be larger than the runway 20, or can include a buffer area about the runway 20. As used herein, a "protected" area 22 can be any area or zone where intrusions or unauthorized access can have particularly undesirable consequences, or wherein heightened authorized access reduces particularly undesirable consequences. In the example of the protected area 22 about the runway 20, intrusions can interfere with aircraft flights, such as takeoff or landing events. As used herein, a "predetermined" area 10 or zone can be distinguished from a "protected" area 22 or zone based on, for example, authorized access (e.g. authorization), or in response to an unauthorized access by an intruder (e.g. an "intrusion"). As used herein, an "intrusion" can include animals, birds, wildlife, or humans. Also as shown, the protected area 22 can include only a subset of the predetermined area 10.

In the example of an airport 12, large areas of landmass can sometimes include or receive unauthorized, unintentional, or undesirable wildlife intrusions in the predetermined area 10 or the protected area 22. Non-limiting examples of wildlife can include ground-based animals (e.g. dogs, cats, deer, rabbits, etc.) or air-based animals (ducks, geese, migratory birds, etc.). Schematic examples of an intrusion by wildlife, animals, persons, or another unauthorized entity are represented by the dotted circles 32 of FIG. 1. The intrusion of wildlife 32 at or near an airport 12 or runway 20 can result in particularly undesirable aircraft 24 contact or "strikes" between the aircraft 24 and the wildlife 32, causing damage to the aircraft 24, or the delay of a flight schedule for the airport 12 until the wildlife 32 is capture, scared away, or otherwise removed from the predetermined area 10 or protected area 22. Thus a system or operation for reducing wildlife 32 presence or intrusion can reduce the risk of such strikes or delays.

In one non-limiting example, the airport 12 can further include a set of sensors 30 or detectors spaced or arranged within the predetermined area 10 or about the protected area 22 to sense, measure, or otherwise detect the presence of an intrusion or wildlife 32. In one example, the set of sensors 30 can be arranged in an array. In another example, such as the example illustrated in FIG. 1, the set of sensors 30 can be arranged to define a sensing perimeter about a subset of the predetermined area 10, such as defining a sensing perimeter about the protected area 22 or runway 20. In this example, the set of sensors 30 can be proximately positioned for sensing or detecting the presence of an intrusion or wildlife 32 approaching the protected area 22 prior to the wildlife 32 reaching the protected area 22.

Non-limiting examples of the set of sensors 30 can include, but are not limited to, radar, wavelength, or frequency-based sensors such as a Doppler radar, motion detectors, infrared sensors, visual-based sensors (e.g. cameras), or the like. In these examples, the set of sensors 30 can be configured or adapted to sense, measure, identify, or recognize the presence of an object or intrusion based on a size or shape detection, a movement detection, or the like. In the example of one or more Doppler radars or another differential-motion-based radar, the set of sensors 30 can be configured or adapted to sense, measure, identify, or recognize the presence of an object or intrusion based on, for example, breathing, wing flapping, or another predefine or predetermined characteristic motion of generic or specific wildlife 32.

The illustrated arrangement of the set of sensors 30 is merely one example of the disposition of the set of sensors 30. Additional sensors 30, or arrangements thereof, are envisioned by aspects of the disclosure.

Additionally, the airport 12 can include at least one ground-based or air-based intercept vehicle 40 positioned about the airport 12, the predetermined area 10, or the protected area 22. In another non-limiting example, a set of intercept vehicles 40 can include a combination of ground-based or air-based intercept vehicles 40. The airport 12 or predetermined area 10 can also include a set of predetermined or predefined capture areas or zones 42 configured or adapted for retaining or restraining intrusions or wildlife 32. For instance, a capture zone 42 can include a set of structural boundaries such as gates, fences, cages, or the like, or can include natural boundaries, such as streams. In another non-limiting example, the set of capture zones 42 can include lethal or non-lethal mechanical trapping mechanisms for retaining or restraining wildlife 32. In yet another non-limiting example, the set of capture zones 42 can be spaced about the airport 12, the predetermined area 10, or the protected area 22, or can be adapted or configured to retain or restrain particular species, categories, or classifications of wildlife 32 (e.g. larger cages for deer, or enclosed cages for birds, etc.).

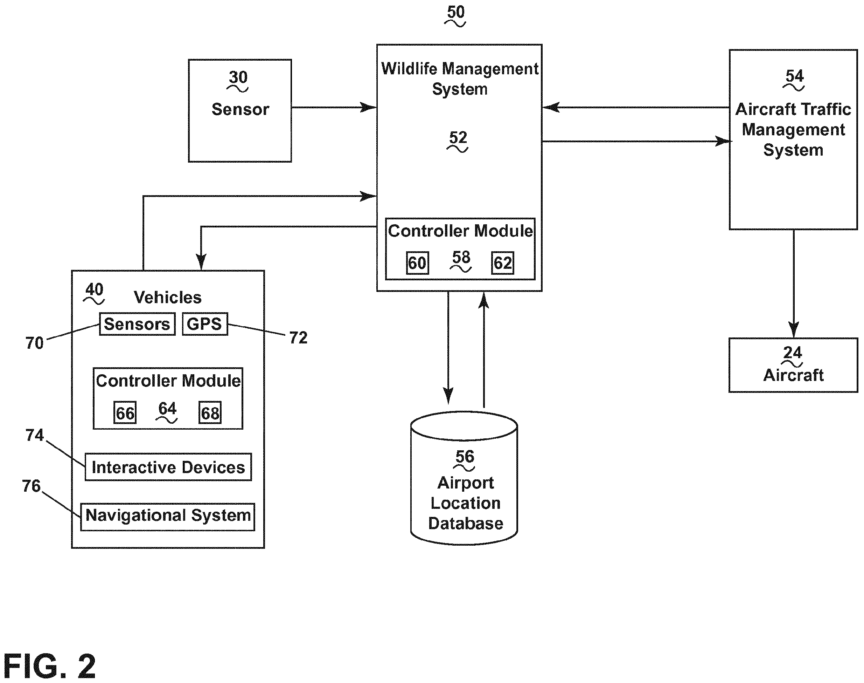

A schematic view of a wildlife intercept system 50, for instance, for the airport 12 of FIG. 1, is illustrated in FIG. 2. As shown, the wildlife intercept system 50 can include a wildlife management system 52, the set of sensors 30 (schematically shown as a single sensor 30), and the set of intercept vehicles 40 (schematically shown as a single intercept vehicle 40). In one non-limiting example, the wildlife management system 52 can receive information, data, communications, or the like from the sensor(s) 30, and can be in bi-directional communication with the intercept vehicle(s) 40.

The set of intercept vehicles 40 can also include a controller module 64 having a processor 66 and memory 68. Additionally, non-limiting examples of one or more of the set of intercept vehicles 40 can include, for instance, a set data-generating inputs, including but not limited to a set of sensors 70 (which can be similar to the set of sensors 30) or a global navigation satellite system (GNSS) module 72. The set of intercept vehicles 40 can also include a set of responsive devices, including but not limited to a set of interactive devices 74 or another navigational system 76.

The set of interactive devices 74 can include devices 74 configured or adapted for interacting with the intrusion or wildlife 32. In one example, "interacting" with the wildlife 32 can include exposing the wildlife 32 to intentionally or purposely startling interactions, such as flashing, lighting, loud sounds, distress calls, or the like. In this sense, the interactive devices 74 designed or adapted for startling, scaring, or causing a "flight" response of the wildlife 32 away from the respective intercept vehicle 40. Non-limiting examples of interactive devices 74 can include pyrotechnics, blank ammunitions, pellets, flares, fireworks, lighting (e.g. flashing, strobing, color-changing, patterned, etc.), or the like. In one example, certain interactive devices 74 can be selected or tailored based on the sensed or identified wildlife 32 (e.g. rabbits are most scared by fireworks). In another example, the interactive devices 74 can be selected based on a rotation or randomly selected, to reduce repeated exposure or familiarity of the wildlife 32 to a particular interactive device 74.

The navigation system 76 can further be distinguishable from the GNSS module 72. In one example, the GNSS module 72 can be configured or adapted to report the current position or location of the intercept vehicle 40 to the controller module 64 of the intercept vehicle 40 or to the wildlife management system 52. In contrast, the navigational system 76 can be configured or adapted to operate the movement of the intercept vehicle 40 in response to receiving navigational directions, commands, instructions, or the like. In one non-limiting example, the navigational system 76 can operate to navigate the movement of the intercept vehicle 40 based on a path or path data received from the wildlife management system 52.

The wildlife management system 52 can further include a controller module 58 having a processor 60 and memory 62. The wildlife intercept system 50 can further include or communicate with optional systems. For example, the wildlife management system 52, such as via the controller module 58, can optionally request and receive data from an airport location database 56 that includes geographic or navigational data related to the airport 12, the predetermined area 10, the runway 20, the protected area 22, or other airport information (e.g. streams, boulder placement, etc.). In another example, the wildlife management system 52, such as via the controller module 58, can optionally request and receive data from an aircraft traffic management system 54, such as a system tasked or charged with informing the movement of aircraft 24 about the airport 12. As used herein, "communicate" and "communications" between respective components can be enabled by way of analogue or digital transmissions across conductive mediums (e.g. conductive data transfer wires, networking, power line networking, etc.) or non-conductive mediums (e.g. wireless transmissions).

Non-limiting aspects of the disclosure can include the operation of the wildlife intercept system 50 to vector, track, herd, or otherwise direct a detected intrusion or wildlife 32 away from a protected area 22, such as the runway 20, toward a capture zone 42. For example, the set of sensors 30 can operate to sense or measure the presence of wildlife 32 relative to the predetermined area 10 or protected area 22, and provide indication of that presence to the wildlife management system 52. In response to the detection or indication of the presence of wildlife 32, the wildlife management system 52 can determine the location of the intrusion or wildlife 32, for example, spatially, based on the received detection of the set of sensors 30, or relative to one or more sensors 30. Once the location of the wildlife 32 is determined, the wildlife management system 52 or the controller module 58 can generate a set of intercept paths, such as navigational instructions, configured to vector the wildlife 32 toward a particular capture zone 42.

The wildlife management system 52 or the controller module 58 can provide, supply, or otherwise communicate the set of intercept paths to the set of intercept vehicles 40 at the airport 12, and in response to the set of intercept paths, the set of intercept vehicles 40 can navigate movement in accordance with the intercept path to vector, heard, or otherwise direct the wildlife 32 toward the particular capture zone 42 without running into another of the set of intercept vehicles 40 or other known traffic at the airport 12.

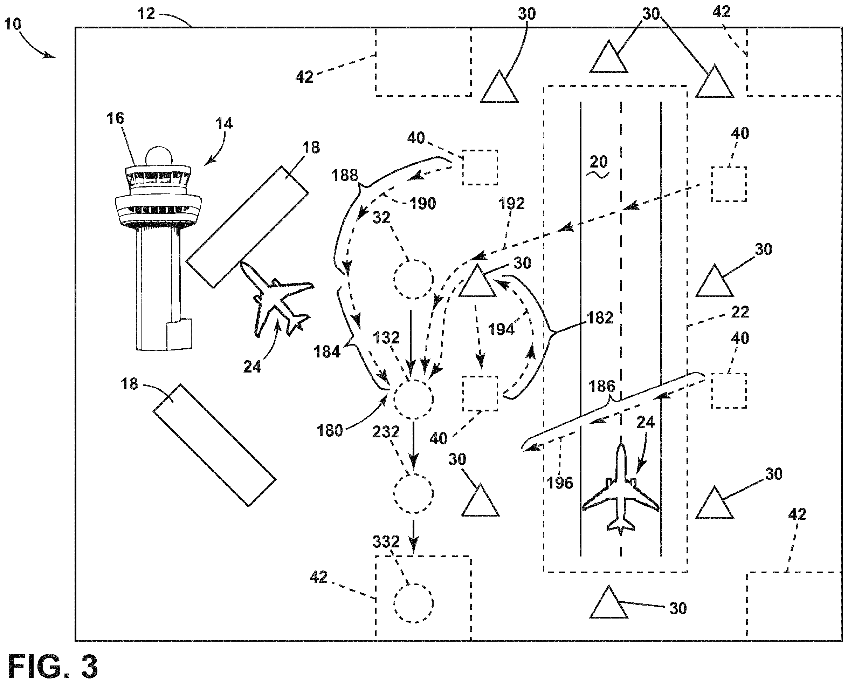

FIG. 3 illustrates one non-limiting example of the operation of the wildlife intercept system 50, in accordance with aspects of the disclosure. As shown, the set of sensors 30 can sense or detect the presence of wildlife 32 relative to the predetermined area 10 or relative to the protected area 22. In response to receiving indication of the presence of the wildlife 32, the wildlife management system 52 (not shown) can determine the location of the wildlife 32, and generate a set of intercept paths 180 for the set of intercept vehicles 40 spaced about the airport 12. The set of intercept paths 180 is shown to include a first intercept path 190, whereby an intercept vehicle 40 can approach the wildlife 32 at a direction or vector from the rear and slightly right (relative to the direction of movement), a second intercept path 192, whereby an intercept vehicle 40 can approach the wildlife 32 at a direction or vector from the rear, and a third intercept path 194, whereby an intercept vehicle 40 can approach the wildlife 32 at a direction or vector from the rear and slightly left (relative to the direction of movement).

In this example, a set of intercept vehicles 40 are positioned to approach the wildlife 32 from the rear, including flanking left and right rear positions, which can be selected, designed, or intended to result in the movement of the wildlife 32 downward (relative to FIG. 3) toward a capture zone 42. The resulting movement of the wildlife 32 is indicated by successive ordered schematic representations, followed by location 132, followed by location 232, and finally ending in location 332, wherein the wildlife 32 is captured at location 332, retained, or otherwise restrained in the capture zone 42.

As shown, the set of intercept paths 180 can include multiple path portions. For example. For example, a first portion 188 of the first intercept path 190 can be adapted, generated, selected, or otherwise configured to position the intercept vehicle 40 about the wildlife 32 in preparation of executing the vectoring of the wildlife 32 toward the capture zone 42. In this example, a second portion 184 of the first intercept path 190 can include the ongoing vectoring as the wildlife 32 movement along positions 132, 232, 332 continues. In this sense, the first intercept path 190 can include both the first portion 188 and the second portion 184.

In yet another example, a portion of at least a subset of the intercept paths 180 can include a portion adapted, generated, selected, or otherwise configured to position at least one intercept vehicle 40 between the intrusion or wildlife 32 and the protected area 22 or runway 20. As shown, the third intercept path 194 can include a portion 182 adapted, generated, selected, or otherwise configured to position the intercept vehicle 40 directly between the runway 20 and the wildlife 32. In this sense, the generated set of intercept paths 180 can work collectively to ensure not only that the wildlife 32 is moving in the intended direction (e.g. 32, 132, 232, 332, toward the capture zone 42), but also ensuring that the wildlife 32 will not stray or veer while being chase or herded by the vehicles toward the protected area 22. Alternatively if the wildlife 32 does veer, the positioning of the intercept vehicle 40 directly between the runway 20 and the wildlife 32 will result in the wildlife 32 veering away from the runway 20, which is a more acceptable solution.

As further shown, a portion 186 of a fourth intercept path 196 can be a trailing chase to the wildlife 32, positioned between the protected area 22 and the wildlife 32. This additional fourth intercept path 196 can operably ensuring that as the first, second, and third intercept paths 190, 192, 194 are executed or operated by the intercept vehicles 40, that the wildlife 32 is again urged away from the protected area 22. In addition to executing the set of intercept paths 180, the set of intercept vehicles 40 can be utilizing one or more of the interactive devices 74 to aid in the vectoring, herding, or directed movement of the wildlife 32. In one non-limiting example, at least one of the set of intercept vehicles 40, at least one of the set of generated intercept paths 180, or at least one operation of the interactive devices 74 can be selected by the wildlife management system 52 based on specific characteristics of the indicated, identified, or determined wildlife 32. For example, unmanned aerial intercept vehicles 40 can be most effective in vectoring migratory bird wildlife 32, whereas firework interactive devices 74 can be most effective in vectoring deer wildlife 32. In one non-limiting example, the generating of the set of intercept paths 180 can further include generating a set of interaction utilizing the interactive devices 74 of the set of intercept vehicles 40, and providing the generated interactions to the set of intercept vehicles along with the intercept paths 180.

In another non-limiting example, the wildlife vectoring system 50 or the wildlife management system 52 can be configured to hold operational activities in vectoring or herd wildlife 32 away from the protected area 22 until authorized by the aircraft traffic management system 54. For instance, upon receiving indication of the presence of an intrusion, the wildlife vectoring system 50 or the wildlife management system 52 can alert the aircraft traffic management system 54 and await operational confirmation or approval prior to performing the wildlife 32 intercept. In this example, if an aircraft 24 is on the runway 20 and ready for takeoff, the aircraft traffic management system 54 can command or otherwise instruct the wildlife vectoring system 50 to hold movement in order to avoid a runway 20 intrusion by an intercept vehicle 40 until after the flight has taken off to avoid traffic delays. In yet another non-limiting example of the wildlife vectoring system 50, aspects of the wildlife management system 52 can be configured or adapted to ensure the generated set of intercept paths 180 are compatible with the respective set of intercept vehicles 40. For example, if a particular intercept path 180 would traverse across a terrain-based or ground-based impediment or obstruction, such as a steep embankment, or through a large rock, the wildlife management system 52 can be configured or adapted to either avoid the impediment (e.g. regenerate a new intercept path 180 avoiding the impediment), or assign that particular intercept path 180 to an intercept vehicle 40 not impeded by the impediment (e.g. an unmanned aerial vehicle that can fly over the rock). In one non-limiting example, terrain-based or ground-based impediment or obstruction can be defined in the airport location database 56.

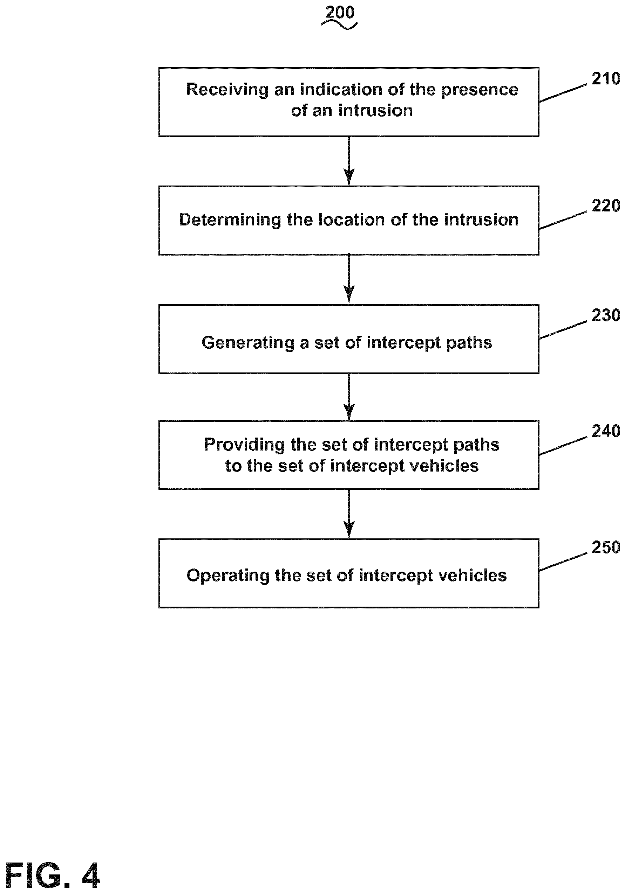

FIG. 4 illustrates a flow chart demonstrating a method 200 of operating a wildlife intercept system 50. The method 200 can begin by receiving, at the controller module 58, an indication of a presence of an intrusion or wildlife 32 in a predetermined area 10, such as the airport 12, the protected area 22, or the runway 20, at 210. The method can also include outputting a signal, such as from at least one of the set of sensors 30, which is received at 210. Next, the method 200 can determine, in the controller module 58, a location of the intrusion in the predetermined area 10, the airport 12, the protected area 22, or the runway 20, at 220. The intrusion can include an animal, person, wildlife 32, etc. The method 200 can then generate, in the controller module 58, a set of intercept paths 180 configured to vector the intrusion or wildlife 32 toward a capture zone 42, at 230. The method 200 can then operably provide the set of intercept paths 180 to the respective set of intercept vehicles 40, at 240. Finally, the method 200 executes the operation of the set of intercept vehicles 40 in accordance with the set of intercept paths 180. It will be understood that this method can include operating a single intercept vehicle 40 along a single intercept path.

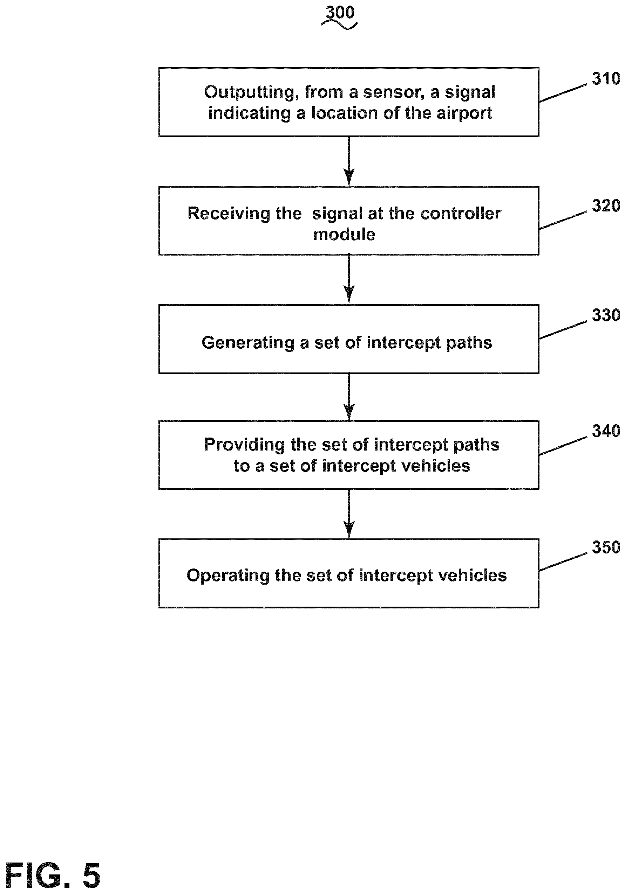

FIG. 5 illustrates a flow chart demonstrating another method 300 operating a wildlife intercept system 50. The method 300 begins by outputting, from at least one sensor 30, a signal indicating a presence of an animal or wildlife 32 in a location of an airport 12 or predetermined area 10, at 310. Next, the method continues to receiving, at the controller module 58, the signal receiving, at the controller module, the signal output in step 310, at 320. The method 300 then generates, in the controller module 58, a set of intercept paths 180 configured to herd the animal or wildlife 32 toward a capture zone 42, at 330. Next, the method 300 provides the set of intercept paths 180 to a respective set of intercept vehicles 40 at 340, and operating the set of intercept vehicles 40 in accordance with the set of intercept paths 180, at 350.

The sequence depicted is for illustrative purposes only and is not meant to limit the methods 200, 300 in any way as it is understood that the portions of the methods 200, 300 can proceed in a different logical order, additional or intervening portions can be included, or described portions of the method can be divided into multiple portions, or described portions of the method can be omitted without detracting from the described method.

Many other possible aspects and configurations in addition to that shown in the above figures are contemplated by the present disclosure. Additionally, the design and placement of the various components of the system can be rearranged such that a number of different configurations could be realized.

The aspects disclosed herein provide a method and system for intercepting wildlife relative to an airport. The technical effect is that the above described aspects enable the strategic and effective herding or vectoring of the wildlife away from protected areas of the airport, such as the runway, in order to prevent unintentional damage cause by contact with the wildlife. One advantage that can be realized in the above aspects is that the above described aspects have improved capabilities to manage wildlife incursions relative to an airport. Improved wildlife management capabilities can result in reduced foreign object damage occurrences for aircraft, reduced flight or airport delays causes by unauthorized runway or protected area access, and the like. Another advantage can include vectoring or herding the wildlife toward a capture zone for later retrieval. In some instances, merely chasing wildlife away does not eliminate or reduce the risk of future intrusion. Aspects of the disclosure can be included wherein, for example, the capture of the wildlife can include removing the wildlife permanently, such as by transferring it to a location miles away from the airport, making it less likely the same animal will result in future intrusions.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

Further aspects of the invention are provided by the subject matter of the following clauses:
1. A method of operating an intrusion intercept system, the method comprising: receiving, at a controller module, an indication of a presence of an intrusion in a predetermined area; determining, in the controller module, a location of the intrusion in the predetermined area; generating, in the controller module, a set of intercept paths configured to vector the intrusion toward a capture zone; providing the set of intercept paths to a respective set of intercept vehicles; and operating the set of intercept vehicles in accordance with the set of intercept paths.
2. The method of any preceding clause wherein receiving includes receiving data from an array of sensors.
3. The method of any preceding clause wherein determining the location includes determining the location of the intrusion based on the received data from the array of sensors.
4. The method of any preceding clause wherein the set of intercept vehicles includes at least one air-based vehicle and at least one ground-based vehicle.
5. The method of any preceding clause wherein generating the intercept path for the at least one ground-based vehicle includes avoiding ground-based obstructions.
6. The method of any preceding clause wherein generating the intercept path for the at least one air-based vehicle is based on avoiding a ground-based obstruction.
7. The method of any preceding clause, further comprising receiving, at the controller module, an indication of the presence of the intrusion in a protected area, the protected area being a subset of the predetermined area.
8. The method of any preceding clause wherein the predetermined area is an airport and the protected area is a runway.
9. The method of any preceding clause wherein generating the set of intercept paths further comprises generating a first portion of the set of intercept paths configured to vector the intrusion away from the protected area, and a second portion of the set of intercept paths configured to vector the intrusion toward the capture zone.
10. The method of any preceding clause, further comprising alerting an aircraft traffic management system to the presence of the intrusion in the predetermined area.
11. The method of any preceding clause, further comprising receiving authorization from the aircraft traffic management system to operate the set of intercept vehicles.
12. The method of any preceding clause wherein generating includes generating, in the controller module, a set of intercept interactions for the intercept vehicles.
13. The method of any preceding clause, further comprising operating a set of interactive devices of at least a subset of the intercept vehicles, wherein the interactive devices are configured to vector the intrusion toward the capture zone.
14. The method of any preceding clause wherein generating the set of intercept paths further comprises generating a first portion of the set of intercept paths configured to direct at least a subset of the intercept vehicles between the intrusion and a protected area, and a second portion of the set of intercept paths configured to vector the intrusion toward the capture zone.
15. A system for vectoring an intrusion away from a predetermined zone, comprises: an array of sensors disposed proximate to the predetermined zone and configured to detect a presence of the intrusion within the predetermined zone; a set of intercept vehicles adapted for movement within the predetermined zone and operable to execute movement within the predetermined zone in accordance with a respective set of intercept paths; and a controller module configured to receive an indication of the presence of the intrusion in a predetermined zone from the array of sensors, to determine a location of the intrusion in the predetermined zone, to generate a set of intercept paths configured to vector the intrusion toward a capture zone, and to provide the set of intercept paths to the set of intercept vehicles for execution of the set of intercept paths.
16. The system of any preceding clause wherein the array of sensors include at least a subset of Doppler sensors configured to detect a motion of an animal.
17. The system of any preceding clause wherein the capture zone is configured to retain the intrusion for further retrieval.
18. A method of operating a wildlife intercept system, the method comprising: outputting, from at least one sensor, a signal indicating a presence of an animal in a location of an airport area; receiving, at the controller module, the signal; generating, in the controller module, a set of intercept paths configured to herd the animal toward a capture zone from the location of the airport area; providing the set of intercept paths to a set of intercept vehicles; and operating the set of intercept vehicles in accordance with the set of intercept paths.
19. The method of any preceding clause, further comprising alerting an aircraft traffic management system to the presence of the animal in the airport area, and receiving authorization from the aircraft traffic management system to operate the set of intercept vehicles.
20. The method of any preceding clause wherein generating the set of intercept paths further comprises generating a first portion of the set of intercept paths configured to direct at least a subset of the intercept vehicles between the animal and a runway, and a second portion of the set of intercept paths configured to herd the animal toward the capture zone.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of operating an intrusion intercept system (50), the method comprising:
receiving, at a controller module (58), an indication of a presence of an intrusion (32) in a predetermined area (10);
determining, in the controller module (58), a location of the intrusion (32) in the predetermined area (10);
generating, in the controller module (58), a set of intercept paths (180) configured to vector the intrusion (32) toward a capture zone (42);
providing the set of intercept paths (180) to a respective set of intercept vehicles (40); and
operating the set of intercept vehicles (40) in accordance with the set of intercept paths (180).

2. The method of claim 1 wherein receiving includes receiving data from an array of sensors (30).

3. The method of claim 1 or 2 wherein determining the location includes determining the location of the intrusion (32) based on the received data from the array of sensors (30).

4. The method of any claim 1-3 wherein the set of intercept vehicles (40) includes at least one air-based vehicle and at least one ground-based vehicle.

5. The method of claim 4 wherein generating the intercept path (180) for the at least one ground-based vehicle includes avoiding ground-based obstructions.

6. The method of claim 4 wherein generating the intercept path (180) for the at least one air-based vehicle is based on avoiding a ground-based obstruction.

7. The method of claim any claim 1-6, further comprising receiving, at the controller module (58), an indication of the presence of the intrusion (32) in a protected area (22), the protected area (22) being a subset of the predetermined area (10).

8. The method of claim 7 wherein generating the set of intercept paths (180) further comprises generating a first portion (188) of the set of intercept paths (180) configured to vector the intrusion (32) away from the protected area (22), and a second portion (184) of the set of intercept paths (180) configured to vector the intrusion (32) toward the capture zone (42).

9. The method of any claim 1-8 wherein generating the set of intercept paths (180) further comprises generating a first portion (188) of the set of intercept paths (180) configured to direct at least a subset of the intercept vehicles (40) between the intrusion (32) and a protected area (22), and a second portion (184) of the set of intercept paths (180) configured to vector the intrusion (32) toward the capture zone (42).

10. A system (50) for vectoring an intrusion (32) away from a predetermined zone (10), comprises:
an array of sensors (30) disposed proximate to the predetermined zone (10) and configured to detect a presence of the intrusion (32) within the predetermined zone (10);
a set of intercept vehicles (40) adapted for movement within the predetermined zone (10) and operable to execute movement within the predetermined zone (10) in accordance with a respective set of intercept paths (180); and
a controller module (58) configured to receive an indication of the presence of the intrusion (32) in a predetermined zone (10) from the array of sensors, to determine a location of the intrusion (32) in the predetermined zone (10), to generate a set of intercept paths (180) configured to vector the intrusion (32) toward a capture zone (42), and to provide the set of intercept paths (180) to the set of intercept vehicles (40) for execution of the set of intercept paths (180).
